# EUROPÄISCHE PATENTANMELDUNG

(11) **EP 2 469 071 A1**
(43) Veröffentlichungstag der Anmeldung: **27.06.2012**
(21) Anmeldenummer: 11009453.9
(22) Anmeldetag: 30.11.2011
(51) Int. Cl.: F03B 9/00, F03B 7/00

(54) **Wasserkraftanlage**

(30) Priorität: 01.12.2010 DE 102010053163
(71) Anmelder: Gemassmer, Karl, 10715 Berlin (DE)
(72) Erfinder: Gemassmer, Karl, 10715 Berlin (DE)

(57) **Zusammenfassung**

Das Verfahren, die neu erfundene mechanische Vorrichtung stellt die Stromgewinnung mit Wasser auf dem Kopf und ist Zukunft weisend und 100% sauber.

Mei Verfahren ist ein Beitrag zur Minderung der Erderwärmung, erzeugt kein Co², kennt keine Windstille oder fehlende Sonnenwärme und kann hohe. Emissionsschutzrechte beanspruchen.

Den gefürchteten Stillstand und Stromausfall kennt mein Verfahren und die mechanische Vorrichtung nicht.

Schon heute muß jeder Staat mit seinen Einwohnern die eigenen Wasservorkommen schonend nutzen und an einer intakten Flora, Fauna, denken. die Lebensräum der Pflanzen und Tiere wird immer kleiner und bedrohlicher.

Das Verfahren braucht wenige Sekundenliter an Wasser, kann leicht wieder hochgepumt werden und wieder in die mechanische Vorrichtung gehen und Antriebsenergie erzeugen.

Ein großer Gewinn der Menschheit ist heute und in der Zukunft sind die kommenden Generationen weniger den Rohstoffspekulantenm der Dritttländer ausgesetzt.

Meine Erfindung,das Verfahren und die mechanische Vorrichtung mit dem umbauten Raum ist in der Erstanschaffung etwas teurer.

Die lange Lebensdauer der Anlage, die Folgekosten an Raraturen und anstehende Betriebskosten sind dafür sehrniedrig.

Keine Rohstoffe müßen zugekauft werden, nichts muß entsorgt werden, die Materie Wasser wird ohne Verschmutzung eingesetzt,ist Wasser übrig geht es zurück zum Fluß.

Von der Planung bis zur Fertigstellung der Anlage werden viele Berufe und Betriebe gebraucht, viele Menschen bekommen Lohn fürs Brot und die Wirtschaft wird bumen.

## Beschreibung

### Stand der Technik

Wasserkraftwerke arbeiten mit dynamischen Staudruck. Sie brauchen grosse Wassereinzugsgebiete und einen Stausee. Grosse Wassermengen gehen mit mehreren 100 bis mehrere 1000 Sekundenliter Wasser auf die Turbinen.

Was nützt die modernste Turbinenanlage, wenn ein Einzugsgebiet mit Stausee nicht genug Wasser vorhalten kann. Das Wasserkraftwerk arbeitet mit halber Kraft, oder steht ganz still.

Die Erderwärmung, der hohe Co² Ausstoss, der starke Zuwachs der Menschheit um ⅓ ca in 50 Jahren zwingt zum Umdenken.

Meine Erfindung, das Verfahren, die mechanische Vorrichtung ist der Sonnenenergie und der Windkraft überlegen, fehlende Sonne oder Wind kennt meine Erfindung nicht.

Meine Erfindung, die mechanische Vorrichtung nutzt die die Materie Wasser, sein Eigengewicht, das oben fliessend die ankommenden Wasserbehälter der Endlosbandandanlage nachfüllt. Das Wasser ruht in den Behältern, die extrem langsam über Führungsschienen nach unten rollen.

Mein Verfahren, die mechanische Vorrichtung ist überall an fliessenden Gewässer mit Berghang ab 30 m bis mehrere 100 m ev. mehr gut zu betreiben. Genau so kann eine Anlage vor einem Stausee arbeiten, oder in einer Braunkohlegrube, oder Stein- bzw. Sandgrube wenn Grundwasser vorhanden ist, eine Abraumhalde eignet sich ebenfals.

Die mechanische Vorrichtung braucht wenig Platz, und ist im Berghang eingarbeitet, wird mit Stahlbeton überdeckt und am Schluss der Baufase bepflanzt.

Ein natürlicher Wasserzufluss über der mechanischen Vorrichtung ist ideal. Genau so lässt sich ein Fluss der unter der Vorrichtung vorbei fließt, gut zu nutzen.das Wasser muß mechanisch mit Wasserpumpen hochgepumt werden.

Der umbaute Raum ist aus Stahlbeton, hat oben Vorhaltebekken,darunter liegt der Hauptschacht für die Enlosbandanlage,beidseitig ist ein Nebenschacht für Generatoren und ein Schienenstrang für Ersatzteile,bzw. Stellraum für notwendigen Zubehör.

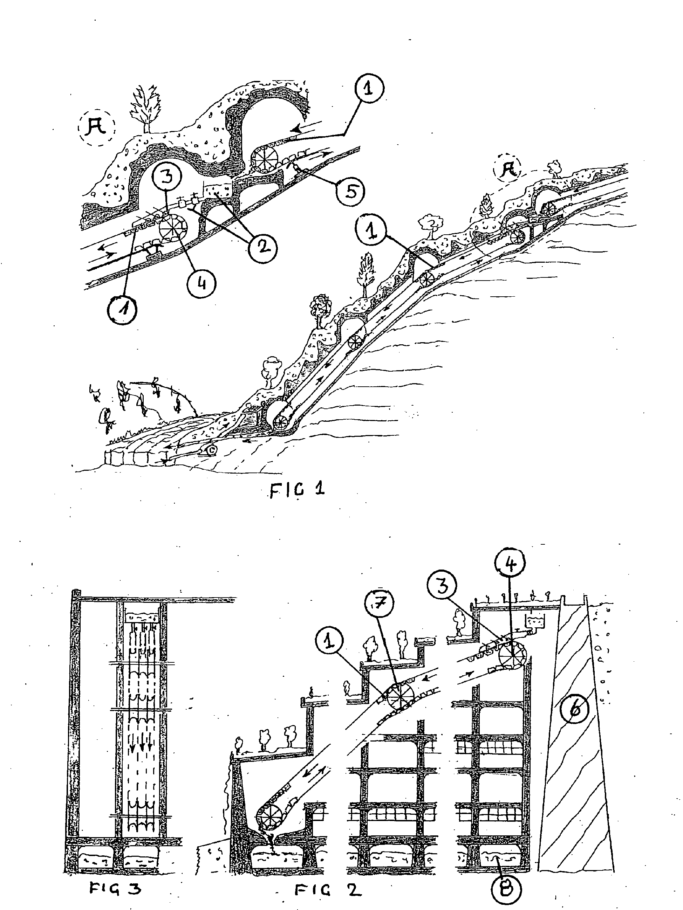

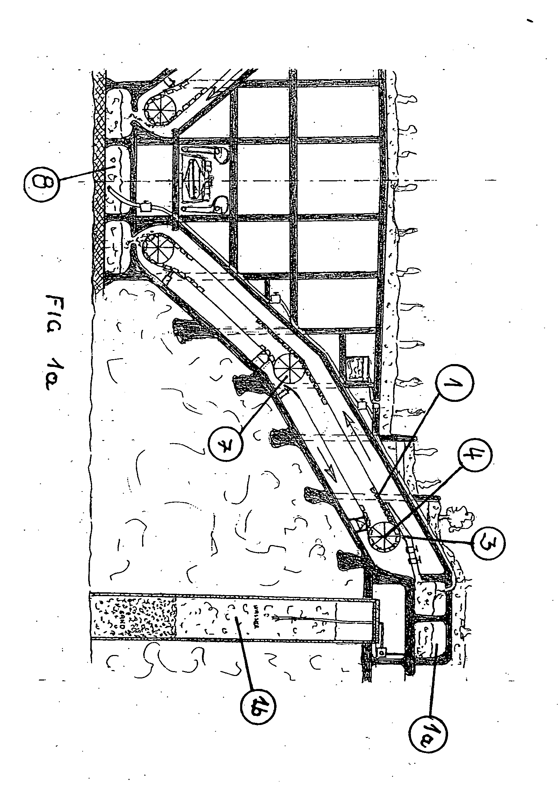

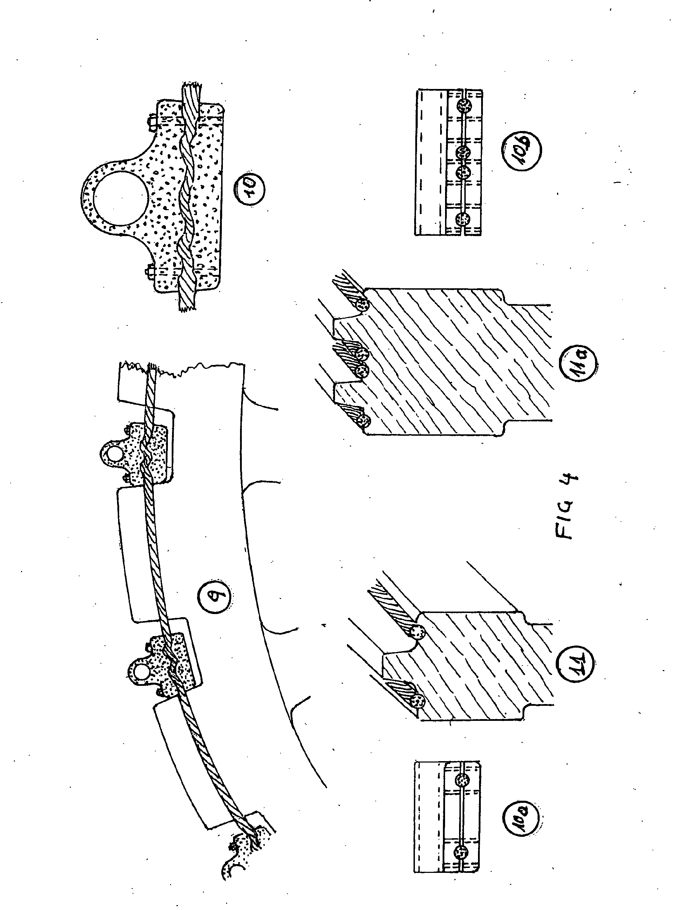

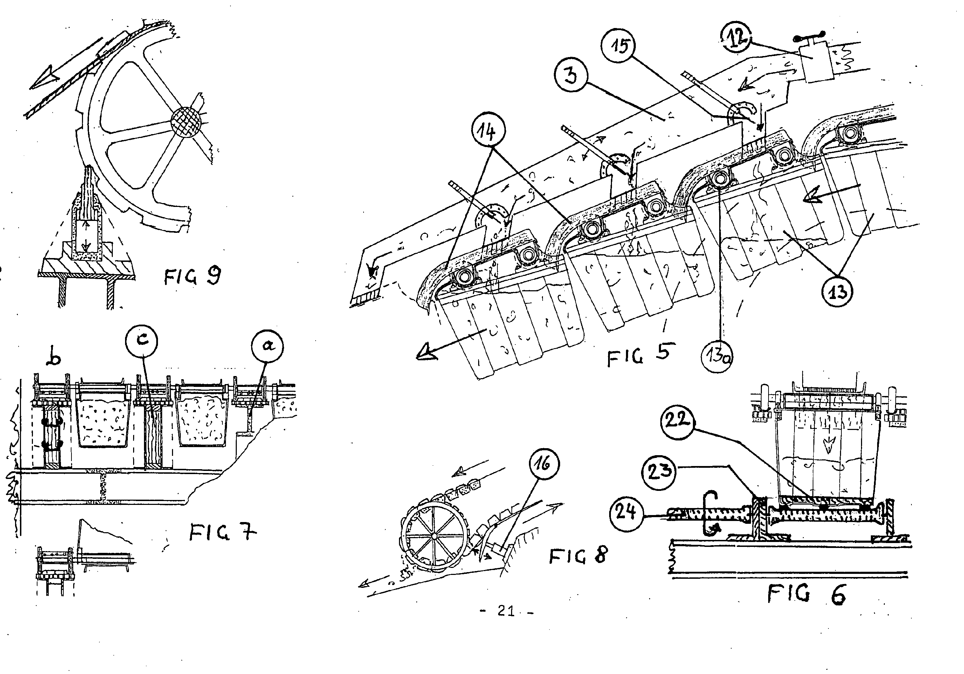

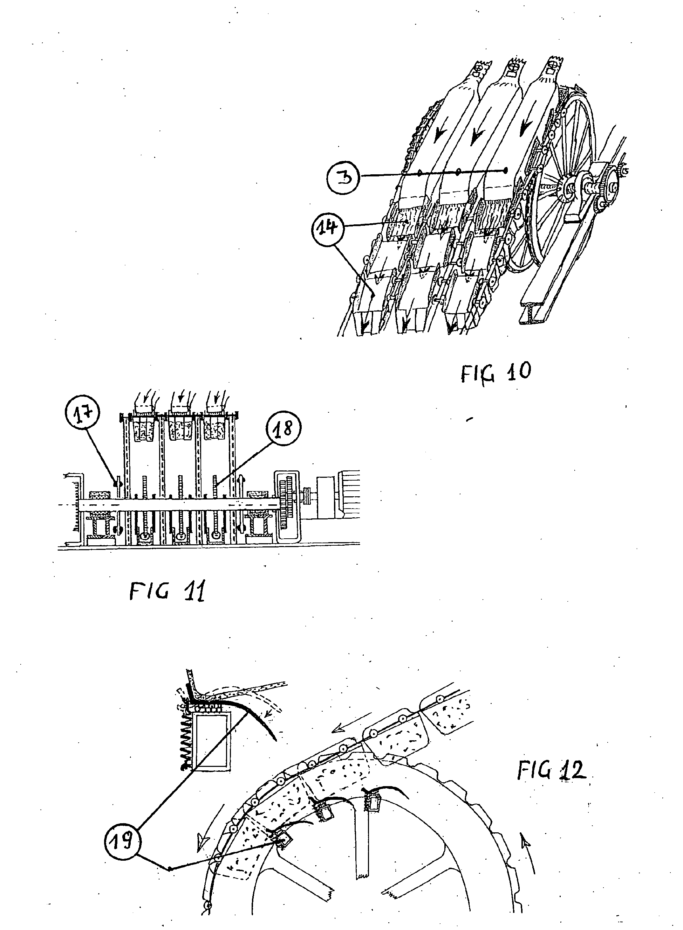

Die mechanische Anlage besteht aus mehreren Abscnitten, ineinander greifen.
a) Mehrkammern-Vorhaltebecken(Wasservorrat für ca. 12-48Std.) davor Verteilerbecken mit 1-4 Füllstutzen,je nach Anlagengröße.
b) Eine Endlosbandanlage(Fig.1+2 besteht aus oberen-,zwischen-, und unteren Umlenkradsatz (Fig.1,P4) mit möglichst großen Radius.
   Je nach Anlagengröße hat ein Umlenkradsatz 2-4 Umlenkräder (Fig.10+11) 2 Scheibenbremsen (P17),Zahnräder mit Schnecken engetriebe mit Motor (P.18) als Geschwindigkeitsregler.
   Eine Ausnahme bilden extrem kurze Anlagen mit einer Berg - oder Staumauerhöhe 30-Xm, mit 5 Umlenkräder für 4 Reihen Wasserbehälter mit Sondermaß.
   Behälter mit einer Tonne Wasserlast müßen Walzrollenbahnen gestützt werden.(Fig.6,P22-24)
   Jedes Umlenkrad hat am Radrand (Fig.4P9-11) 2-6 Seilrillen für Drahtseile ab 15mm-50mm Querschnitt, und 1-2 grobe Zahnkränze.
c) Auf jedem Umlenkrad ist ein mehradriges Endlosband aus mehreren 2-6 Drahtseilen,die kontrolliert mit Querverbinder verbunden sind nach einem Rastermaß aufmontiert sind. (Fig.4;P.9-11)
   Die Achshalter tragen die Achsenstummel und die Laufrollen mit Verbindungsrohre, an denen die eng hintereinander aufmontierten gefüllten Wasserbehälter auf Führungsschienen extrem langsam nach unten rollen.
   Solche Tonnenlasten auf so langen Strecken schaffen nur 2-6 adrige Drahtseilbänder (Fig. 4 P.9-11a)
   Man muß wissen, die se schwere Wasserlast tragen die Führungsschienen (Fig.7) die Drahtseilbänder halten kontrolliert die schwere Zuglast.
   Mir ist keine Ein- oder Mehrgliederkette bekannt, die solche schwere Tonnenlasten am Berghang bzw. vor einer Staumauer über so lange Strecken tragen kann (Fig.1+2).
   Durch die 2-6 Drahtseile mit Querverbinder ist für ausreichende Sicherheit gesorgt.
d) Auf den Drahtseilschenkellängen ab 20-250 m ev.mehr zwischen den Umlenkachspunkten oben und Unten,auf denen die vollen Wasserbehälter hängen, das ergibt je nach Anlagengröße 10 bis mehrere 100 Tonnen echte Wasserlast plus Hebelkraft bedingt durch den großen Radius vom Umlenkrad.
   Beispiel: Bei einem Umlenkradsatz hat je Rad 3m Radius, die echte Wasserlast in Tonnen wird vom Achspunkt aus gesehen hin zum Radkranz 3 m angehoben. Der gewonnene starke Hebel von 3 m ist der starke Drehdruck auf der Umlenkradachse plus 20-30% Druckgewinn auf den Achspunkt.
   Beispiel: Eine mittlere mechanische Vorrichtung als Anlage mit einer Schenkellänge beim Endlosband 100m,gemessen vom Achspunkt oben zum Achspunkt unten mit 3 Reihen Wasserbehälter, die eng hintereinander hängen.
   Jeder Wasserbehälter ist knapp 100cm lang, 80 cm breit und 80 cm hoch und kann 500 lt. Wasser aufnehmen. Je Reihe ca. 100volle Wasserbehälter mal 3 Reihen (Fig.10) ergibt eine Wasserlast von 150 Tonnen plus Hebelkraft +20%.
   Das ist ein Drehdruck auf die Umlenkradachse ca 180 Tonnen als echte gewonnene Antriebsenergie, die Tag und Nacht zur Verfügung steht.
e) Der extrem langsame starke Drehdruck auf der Umlenkradachse fließt zum Zahnradübersetzungsblock, der eine noch niedrige Drehzahl aufbaut, die an eine Kupplung geht, die ein Anpassgetriebe mit vorberechneter Drehzahl, den Generator antreibt und neuen Strom erzeugt.

Zahnradübersetzungsblöcke,Kupplungen, Anpassgetriebe usw. stellen Maschinen- bzw. Anlagebauer her und passen sie auch an.

Die mechanische Vorrichtung ist so hergestellt,oben werden die ankommenden Wasserbehälter endlos nachgefüllt (Fig. 2P3), unten werden zur gleichen Zeit durch Umlenkung am Umlenkradsatz die Wasserbehälter entleert. (Fig.12)

Die mechanische Vorrichtung kommt mit wenig Sekundenliter an Wasser aus. Geplant ist eine Laufgeschwindigkeit beim Endlosband mit vollen Wasserbehälter pro Minute 0.50 m, dafür werden je Wasserbehälterreihe ca 5 Sekundenliter Wasser gebraucht.
Ein Endlosbandblock mit 3 Reihen Wasserbehälter braucht ca. 15 Sekundenliter Wasser.
Alternativ muß man Versuche machen z.B.Laufgeschwindigkeit pro Minute 0,25m werden ca 7,5 Sekundenliter Wasser gebraucht. Der Drehdruck auf der Umlenkradachse bleibt immer gleich.

Meine Erfindung ist vorbildlich sie braucht wenig Platz und wird im natürlichen Gelände vollkommen im Erdreich eingearbeitet, mit Betondecke Überbaut und rekultiviert.
Erderwärmung keine, 100% sauber, kein C°2, θ Emissionsausstoß.
Umwelterhalt und Umweltschutz an den Gewässern, es darf nur soviel Wasser entnommen werden, daß Flora, Fauna, alle Fische und andere Tiere ohne Schaden weiterleben können.

Meine Erfindung, das Verfahren, die mechanische Vorrichtung braucht keine großen Stauseeen. Es reicht ein Mehrkammern-Auffangbecken unten und ein Mehrkammern-Vorhaltebekken oben um für 12 - 48 Stunden Wasservorrat zu halten.
Im 24 Std. Tagesrittmus sind oft große Strommengen übrig, die zum Hochpumpen der Wassermenge im oberen Vorhaltebekken genutzt wird.

Meine Erfindung,das Verfahren, die mechanische Vorrichtung ist in der Erstanschaffung-etwas teurer, dafür sind die anfallenden Betriebskosten und der Materialverschleiß ungewöhnlich niedrig. 0 Brennstoffeinkauf, 0 Entsorgung.
Die Materie Wasser wird nicht verschmutzt, ist Wasser übrig, wird es dem Fluß einfach wieder zugeführt und steht an anderer Stelle zur neuen Nutzung zur Verfügung.

Meine Erfindung nutzt nur Wasserresorsen im eigenen Land, das nahe am Verbraucher, braucht sich vor Erpressung von Spekulanten und Drittländer nicht mehr zu fürchten.
Die Strompreise lassen sich für die Industrie und den Haushalt niedrig und stabil halten.
Deutschland bekommt einen sicheren und sauberen Strommix ohne Atomkraft.

### BESCHREIBUNG DER SKIZZEN

Bemerkung: Alle Skizzen sind nicht Maßstab gerecht.

Fig. 1 zeigt eine Seitenansicht einer Endlosbandanlage, wo das fließende Gewässer unten vorbei fließt. Die Anlage ist im Berg eingelassen, überbaut und am Ende der Baufase ist das Gelände rekultiviert und bepflanzt.
Angenommen das oben vorbei fließende Gewässer hat zu' wenig Wasser, denn Flora und Fauna, Fische und Tierwelt darf keinen Schaden nehmen, muß für die kommenden Generationen erhalten bleiben. Ein Teil Wasser muß aufgefangen werden und mechanisch hochgepumt werden.

Detail A über Fig. 1
zeigt die Wasserübergabe von der oberen Endlosbandanlage zur unteren Endlosbandanlage.
Punkt 1 zeigt das Endlosband mit gefüllten Wasserbehälter.
Punkt 2 zeigt das Sammelbecken Detail A
Punkt 3 zeigt den starren Füllstutzen mit mehreren Füllmäuler.
Punkt 4 zeigt den oberen Umlenkradsatz.

Fig. 1a zeigt eine Seitenansicht einer Anlage im Braunkohle Tagebau bzw. aufgelassene Sandgrube usw.
Punkt 1a zeigt das obere Vorhaltebecken.

Punkt 1b zeigt den Berg mit eingearbeiteten Tiefbrunnen für Grundwasser.

Fig.2 zeigt eine Seitenansicht einer Endlosbandanlage vor einen Staudamm.
Punkt 6 zeigt einen Staudamm
Punkt 7 zeigt einen Zwischenradsatz, die Wasserlast wird besser genutzt.
Punkt 8 zeigt das Auffangbecken unten.

Fig.3 zeigt eine Draufsicht eines Enlosbandblockes vor einem Staudamm. ( nur angedeutet).

Fig.4
Punkt 9 zeigt eine Seitenansicht, einen Teil vom Umlenkrad mit groben Zahnkranz mit tiefer ausgefrästen Mulden für Querverbinder.
Punkt 10 zeigt einen Schnitt durch einen Querverbinder mit Achshülse.
Punkt 10a zeigt eine Vorderansicht vom Querverbinder für 2 Drahtseilen
Punkt 10b zeigt eine Vorderansicht von einen schweren Querverbinder für 4-max. 6 Drahtseilen.
Punkt 11 zeigt einen Schritt eines Umlenkrades mit Zahnkranz für 2 Drahtseile.
Punkt 11a zeigt einen Schnitt eines schweren Umlenkrades mit doppelten Zahnkranz und 4 - 6 Drahtseile.

Fig.5 zeigt eine Seitenansicht des Nachfüllstutzen mit darunter vorbeilaufenden Wasserbehälter beim Nachfüllvorgang.
Punkt 3 zeigt den starren Nachfüllstutzen mit 4-max.6 Füllmäuler, regulierbar sind.
Punkt 12 zeigt das Reglerventil
Punkt 13 zeigt die ankommenden leeren Wasserbehälter Punkt 13a zeigt die Aufhängung vom Wasserbehälter.
Punkt 14 zeigt die aufgesattelte gebogene Ablaufrinne.
Punkt 15 zeigt den Regler im Nachfüllmaul.

Fig.6 zeigt einen Schnitt Laufrollen, Achse, Ablaufrinne und Behälter.
Punkt 22 zeigt den verstärkten Boden mit 3 UKufen.
Punkt 23 zeigt die L Eisenträger.
Punkt 24 zeigt Walzenrollen die Kugellager haben.

Fig.7 zeigt Dreierblock mit Wasserbehälter
Punkt a : Führungsschiene aus massiven T Träger.
Punkt b Führungsschiene aus gestauchten abgekannteten dicken Blech mit punktgeschweißten Mittelstreifen.

Fig.8 zeigt eine Seitenansicht vom unteren Umlenkradsatz mit beweglichen Führungsschienenansatz mit Ö1- bzw. Luftzylinderstütze.(P 16)

Fig. 9 zeigt eine Seitenansicht vom Umlenkrad oben mit Not-Stopp Ö1-bzw. Luftzylinder mit Bolzen.

Fig. 10 zeigt einen oberen Umlenkradsatzblock mit 3 Reihen Wasserbehälter beim Nachfüllvbrgang.
Punkt 3 zeigt die starren Nachfüllstutzen.
Punkt 14 zeigt die aufgesattelte Ablaufrinne, wie sie mit Endlosband und Wasserbehälter unter den Nachfüllstutzen nach unten rollt und Wasser in die Behälter füllt.

Fig.11 zeigt einen Schnitt durch oberen Umlenkradblock.
Punkt 17 zeigt die Scheibenbremse
Punkt 18 zeigt die Zahnräder mit Schneckenrad und Motor, das die Laufgeschwindigkeit vom Endlosband regelt.

Fig.12 zeigt die ankommenden vollen Wasserbehälter, die sich an der beweglichen Stützvorrichtung (P19) stützt. Die Stützvorrichtung kann auch im Rad eingearbeitet sein.

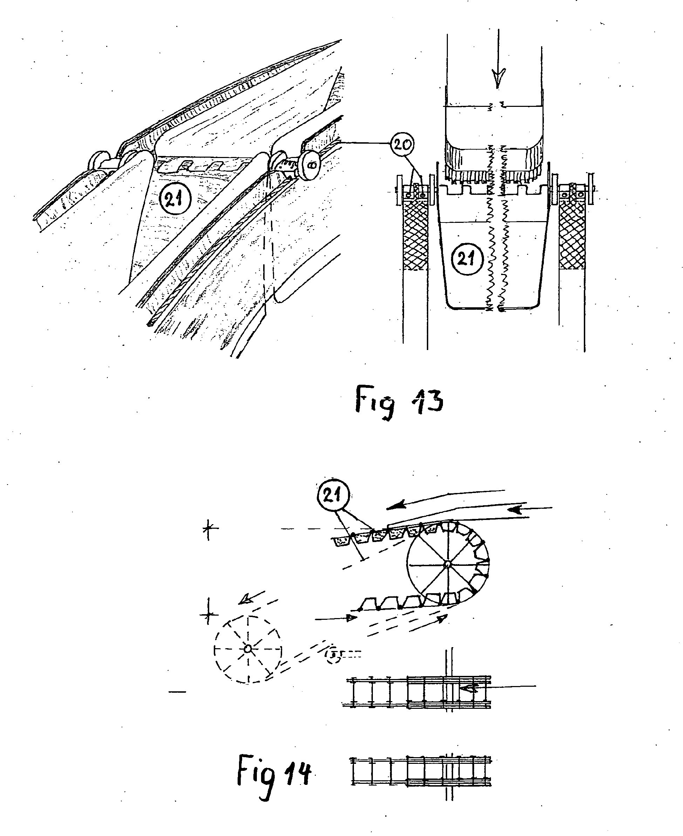

Fig.13 zeigt für eine Kleinanlage die offenen Wassertaschen (P.19) und das Endlosband einer Kleinanlage (P.20)

Fig. 14 zeigt eine kurze kleine Endlosbandanlage. Eine längere Kleinanlage ist ersatzweise angedeutet.

## Patentansprüche

1. Die Erfindung, das Verfahren ist **dadurch gekennzeichnet, daß** mit der neu erfundenen mechanischen Vorrichtung das Eigengewicht der Materie Wasser ohne dynamischen Staudruck nutzt. Genutzt wird die Schwerkraft des Wassers.
Das Verfahren, die mechanische Vorrichtung ist **dadurch gekennzeichnet, daß** die Anlage wenige Sekundenliter der Materie Wasser braucht, um eine echte Wasserlast bis X 100 t aufzubauen und Tag und Nacht vorzuhalten als Antriebsenergie.
Der obere Abschnitt, Wasserzufluß
Die mechanische Vorrichtung ist **dadurch gekennzeichnet,das** Wasser,egal ob es aus einen natürlichen Fluß von oben, was ideal ist, oder künstlich hoch gepumt wird, geht es in ein Vorhaltebecken, fließt in der Menge geregelt in den Nachfüllstutzen(Fig.5P.3),fällt auf die ankommenden gebogenen Ablaufrinnen((Fig.5,P14) und alle Wasserbehälter (Fig.5P13) werden endlos nachgefüllt.
Der untere Hauptabschnitt Endlosbandblock
Das Verfahren ist **dadurch gekennzeichnet,daß** besondere umbaute Räume nach der Schräge des Berghanges gebaut sein mü-Ben.(Fig.1+ Detail A)
Das Verfahren ist **dadurch gekennzeichnet**,es eignen sich auch abgernte Braunkohlegruben,Sandgruben, oder Steinbruch,wenn ein kleiner Berg und Grundwasser vorhanden ist.(Fig.1a)
Das Verfahren ist **dadurch gekennzeichnet,daß** vor einen Staudamm ein künstliches Bauwerk für das Verfahren und der mechanischen Vorrichtung eignet.(Fig.2)
Der Hauptschacht ist **dadurch gekennzeichnet,daß** die gesamte Endlosbandanlage die mechanische Vorrichtung aufmontiert ist. In den Nebenschächten sind Zahnradblöcke bis hin zu den dynamischelektrischen-bzw. Bandgenenratoren aufgebaut.
Die UMlenkradachsen, oben, dazwischen und unten sind **dadurch gekennzeichnet**, am Achspunkt ist die Drehkraft am Stärksten, sie fließt zum Zahnradübersetzungsblock.(unterer Drehzahlbereich)
**Dadurch gekennzeichnet**, die mittlere starke Drehkraft fließt zur Kupplung,die das Anpaßgetriebe und den Generator antreibt.

2. Nebenanspruch nach Anspruch 1
Umbaute Räume **dadurch gekennzeichnet,daß** sie im Berghang eingelassen sind,mit starken Betondecken wintersicher überbaut sind und am Ende der Baufase rekultiviert und bepflanzt sind, das gilt auch für die Wasserbecken oben, ev. auch Unten.
Das Vorhaltebecken oben ist **dadurch gekennzeichnet**,es ist ein Mehrkammernbecken mit entsprechenden Anschlüßen.
Darunter ist der Hauptschacht,**dadurch gekennzeichnet**,er ist nach der Bergschräge angepaßt, oben ist die Nachfüllvorrichtung aufgebaut, darunter ist die Endlosbandanlanlage mit der gesamten mechanischen Vorrichtung aufmontiert.
Auf beiden Seiten sind Nebenschächte für Getriebe, Generatoren und Schienenstrang für Ersatzteiltransport usw. vorgesehen.
Unten ist ein Mehrkammern Auffangbecken mit Wasserpumpenraum vorgesehen.
Vor einem Staudamm ist **dadurch gekennzeichnet,daß** die Anlage mit Schächten und Nebenräumen künstlich gebaut ist und auch wintersicher überbaut sein muß,ev. bepflanzt.
Siehe (Fig. 1, Dtail A, Fig.1a+2)

3. Nebenanspruch nach Anspruch 1
Das Grundgestell ist **dadurch gekennzeichnet**, es kann aus Beton mit Stahlarmierung,oder schweren Ganzstahlprofilen hergestellt sein auf dem der Umlenkradsatz aufmontiert ist.

4. Nebenanspruch nach Anspruch 1
Zwischen den Grundgestellen,sind je nach Anlagengröße Führungsschienen aufmaontiert,**dadurch gekennzeichnet**, sie können aus T Trägern sein, oder aus dicken gestauchten Blech, das doppelwandig mit 2-3 U Blechen ausgesteift ist und punktverschweißt ist (Fig.7a+b)
Auch aus wasserfesten dicken Multiplexplatten mit Leimbinder Aussteifung ist denkbar.
Walzrollenbahnen, die etwa gleich lang wie die Führungsschienen sind, **dadurch gekennzeichnet**, die Walzrollen sind auf starke L Eisenträger kugelgelagert aufmontiert und haben einen bestimmtes Rastermaß, sie stützen die Wasserbehältrt.

5. Nebenanspruch nach Anspruch 1
jeder Umlenkradsatz ist **dadurch gekennzeichnet,daß** er 2-5 Umlenkräder mit großen Radius 2-4m vorzugsweise 3m hat.
Jedes Umlenkrad ist **dadurch gekennzeichnet,daß** es am Radrand 2-6 Rillen je nach Drahtseilquerschnitt und 1-2 Reihen grobe Zahnkränze nach bestimmten Raster eingefräst bzw. eingearbeitet sind. Jedes Rad muß aus Transportgründen zerlegbar sein.
Die starke Hauptachse ist **dadurch gekennzeichnet,daß** sie die gesamte Zuglast halten muß, daher aus hochfesten zähen Stahl sein muß und den statischen Nachweis hat.
Z.B. Bei einem Dreierendlosblock (Fig.10+11,P17+18 muß folgendes aufmontiert sein.
a) 4große Umlenkräder Radius 3m (Fig.10+11)
b) Außen seitlich 2 große Scheibenbremsen oder ähnliches. (Fig.11.P17)
c) 3 große Zahnräder mit Schneckenrad und Motor,diese regeln die Laufgeschwindigkeit der Endlosbandanlage regelt. (Fig.11 P.18)
Die Laufgeschwindigkeit je Minute z.B. 0,25m,oder 0,50,oder 1,00m vorgesehen ist, vorzugsweise sind 0,50m anzustreben.

6. Nebenanspruch nach Anspruch 1
Jedes Endlosband,(ein Dreierblock hat 4 Endlosbänder)(Fig. 10) ist **dadurch gekennzeichnet,daß** je nach Anlagengröße auf jedem Umlenkrad(Fig.4P:9-11) 2-6 Drahtseile mit einen Querschnitt je Drahtseil 15-50mm aufgelegt sind.
Die Endlosbänder aus mehreren Drahtseilen sind **dadurch gekennzeichnet,daß** Querverbinder mit aufgesattelter Achshülse für gleichmäßigen Abstand sorgen. (Fig.4,P.10+10a).
Die gebündelten Drahtseilbänder je Umlenkrad sind **dadurch gekennzeichnet,daß** sie in der Lage sind lange Strecken ab 30-300m ev. mehr zu überbrücken, und so große Wasserlasten bis X 100 t. ev.mehr, auf Führungsschienen zu halten und und nach unten führen kann. (Fig.1+2)
Bemerkung: Es gibt keine Ein- oder Mehrgliederkette, die solch große Tonnenlasten halten und nach unten sicher führen kann. Man muß wissen die Last wird auf Führungsschienen getragen und zugleich von Walzrollen gestützt werden. (Fig.6)

7. Nebenanspruch nach Anspruch 1
Die Querverbinder mit aufgesattelten Achshülsen,sind **dadurch gekennzeichnet, daß** sie aus hachfesten zähen Stahl sind,sie halten den Zwischenabstand der Drahtseile und tragen die Achsstummel mit Alulaufrollen bzw. Kunststoffrollen.
Die Achsstummel tragen die aufgeschobenen Rahrverbinder,an denen die vollen Wasserbehälter hängen.
Die Querverbinder sind **dadurch gekennzeichnet,daß** sie nach einem festgelegten Raster aufmontiert sind,wo jede Querverbinderbrust mit dem groben Zahnrücken am Umlenkrad übereinstimmen muß.(Fig.4,P9) Dieser mechanische Teil sichert das Endlosband mit den vollen Wasserbehältern gegen Durchrutschen und zwingt den Umlenkrad sich zu drehen.

8. Nebenanspruch nach Anspruch 1
Das Wasserbehälterkorb aus Alu ist **dadurch gekennzeichnet**
**daß** er aus Rechteck- bzw. Quadratrohre gefertigt ist. Im Bereich der Aufhängungen mit eingeschobenen Hartholz(das das Einknicken der Rohre hemmt) ausgefüllt sein müßen. Die Rahmen müßen verschweißt und diagonal ausgesteift sein.
Der Alukorb ist **dadurch gekennzeichnet,daß** er muß sich leicht von der Aufhängung schnell per Schnellverschluß trennen und genau so schnell wieder befestigen lassen.
Das ist zwingend einzuhalten,**dadurch gekennzeichnet,daß** Teile vom Wasserbehälter bis hin zur Laufrolle und Querverbinder auf vorhandenen beweglichen Arbeitsbühnen mit eingeübten Team im sog. fliegenden Wechsel Ersatzteile austauschen können.
Jeder Wasserbehälter hängt an 4 Aufhängungen, die **dadurch gekennzeichnet sind, daß** die unteren 2 Aufhängungen nur 1 Drehlager haben (Fig.5,P.13a),sie stabilieren den Wasserbehälter.
die oberen 2 Aufhängungen sind **dadurch gekennzeichnet,daß** jedes Drehlager ein Gelenk bzw. eine gefräste Führung hat, um gerade und krumme Strecken zwischen Führungsschienen und Umlenkrad ausgleichen zu können.

9. Nebenanspruch nach Anspruch 1
Jeder Wasserkorb mit Wasserbehälter ist **dadurch gekennzeichnet**,er muß dem Umfang des Umlenkrades angepaßt sein.(Fig.5 P.13+Fig.10)
Der Wasserbehälter ist **dadurch gekennzeichnet,daß** er einen Haupteil hat (Fig.5,P13) aus Vollkunststoff ist,der gestaucht, gerippt bzw. gefaltet ist um mehr Stabilität zu haben und im Alukorb passen, oder aus ganz Alu,oder Weißblech ist.
Der Behälter hat ein aufgeschobenes Oberteil,**dadurch gekennzeichnet,daß** er Einbuchtungen für 2 Achsen bzw. Verbindungsrohre und ein Nachfüllmaul hat.(Fig.5,P13a)
Die Behälter sind aus zähen schlagfesten Kunststoff hergegestellt,**dadurch gekennzeichnet daß** innen ein zu fast 100% schadstofffreier Belag aufgebracht sein muß, um auch Wasser in Trinkwasserqualität ev. nutzen zu können. Das optische Ausehen der Behälter ist Nebensache.
Im Ausnahmefall kann man auch prakiges Wasser nutzen,das muß ein Sonderfall bleiben.
Ein Kern der mechanischen Anlage ist die gebogene Ablaufrinne (Fig.5,P14) aus Vollkunststoff,**dadurch gekennzeichnet, daß** sie auf jeden Wasserbehälter aufgesattelt ist und in den Vorbehälter greift,das ankommende Wasser aus dem Nachfüllstutzen zugleich vorwiegend dem Vorbehälter zuführt.

10. Nebenanspruch nach Anspruch 1
Für Kleinanlagen eignet sich das Verfahren und die mechanische Vorrichtung in Leichter Ausführung,wo oft reichlich Wasser ankommt, aber wenig Gefälle vorhanden ist und heute ein einfaches Wasserrad läuft.
Das Endlosband ist **dadurch gekennzeichnet, daß** eine Drahtkorbkette dem Umfang des Umlenkradsatzes angepasst sein muß. (Fig. 13+14). Die Kunststofftaschen sind fest in jeden Drahtkorb eingebaut,sie überschneiden sich ,und können ungeregelt bzw. geregelt,je nach Wasseraufkommen nach unten rollen.
Das Verfahren und die mechanische Vorrichtung ist **dadurch gekennzeichnet,daß** die ankommende Wasserlast sich erhöht und länger auf dem Band bleibt und 2 Umlenkradsätze antreibt.

11. Nebenanspruch nach Anspruch 1
Das Wasser das aus dem Vorhaltebecken kommt,ist **dadurch gekennzeichnet**, ein Notabsperrventil und ein Reglerventil regelt das Wasser,das in den Nachfüllstutzen fließt (Fig.5,P12)
Der Nachfüllstutzen mit 2-6 Füllmäuler,einzeln oder als Mehrfachbox ist **dadurch gekennzeichnet**,er ist aus Vollkunststoff oder Weißblech, mit Siebe bestückt, die den Wasserdruck bremsen. dadurch die Wasserbehälter schonen.
Für Kleinanlagen reicht eineinfacher Nachfüllstutzen ohne Nachfüllmäuler.

12. Nebenanspruch nach Anspruch 1
Neue Drahtseile sind **dadurch gekennzeichnet,daß** herstellungsbedingt, bei stärkerDauerbeanspruchung verlängern sich die Drahtseile.(Das kennt man von Drahtseilbahnen.)
Der obere Umlenkradsatz ist daher starr aufmontiert, ein Zwischenradsatz(Fig.2,P.7) der untere Radsatz sind **dadurch gekennzeichnet**,sie müßen verstellbar sein.
Man muß wissen der grobe Zahnkranz und die Querverbinder sperren am Zwischen-und unteren Umlenkradsatz durch starke Beanspruchung das länger werdende Drahtseilband.

13. Nebenanspruch nach Anspruch 1
Beim Rücklauf der Wasserbehälter muß hinter dem unteren Umlenkradsatz,an den Führungsschienen ein sog. Führungsbogen (Fig.8P.16) angebracht sein um das ev. locker werdende Drahtseilband automatisch über Ö1-oder Luftdruckzylinder zu spannen.
Bei kleinen Anlagen reicht ein beweglicher automatisch spannender Führungsbügel.

14. Nebenanspruch nach Anspruch 1
Die Wasserbehälter müßen im unteren Umlenkradsatz gestützt werden, **dadurch gekennzeichnet,daß** eine bewegliche Stützvorrichtung (Fig,12,P.19) bzw. eine starre Stützvorrichtung eingebaut sein muß, weil sich durch die Umlenkung die Wassermenge total verlagert und die Behälter starkbeansprucht.

15. Nebenanspruch nach Anspruch 1
Die Not-Stopp Vorrichtungen (Fig.9) sind **dadurch gekennzeichnet, daß** vor jedem Umlenkrad einöl-bzw. Luftzylinder mit starken Bolzen die Umlenkradanlage,von oben beginnend mit leichter Verzögerung sperrt. Umgekehrt bei Betriebsbeginn sich der Bolzen von unten begginnedd sich löst.
Hinweis, alle mechanischen Vorrichtungen ab Umlenk-bzw.Zwischenradsätzen stellen Maschinen-bzw. Anlagenbauer her,sie müßen jedoch angepaßt werden.
Zum.Beispiel:
Zahnradübersetzungsblöcke, Kupplungen, anpassgetriebe, dynamoelektrische Generatoren, oder Bandgeneratoren mit Zusatzgeräte und Nebenagregate und Zubehör usw.
